(19)

Europäisches
Patentamt
European
Patent Office
Office européen
des brevets

(11) **EP 4 376 533 A1**

(12) **EUROPEAN PATENT APPLICATION**

(43) Date of publication:
**29.05.2024   Bulletin 2024/22**

(21) Application number: **22306750.5**

(22) Date of filing: **28.11.2022**

(51) International Patent Classification (IPC):
***H04W 74/08*** *(2024.01)*

(52) Cooperative Patent Classification (CPC):
**H04W 74/0833;** H04L 5/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Eurecom
06410 Biot (FR)**

(72) Inventors:
• **LE, Trung Kien
06410 BIOT (FR)**
• **WAGNER, Sebastian
06410 BIOT (FR)**
• **KNOPP, Raymond
06410 BIOT (FR)**

(74) Representative: **Atout PI Laplace
Immeuble Up On
25 Boulevard Romain Rolland
CS 40072
75685 Paris Cedex 14 (FR)**

(54) **ENHANCED RANDOM ACCESS PROCEDURE USING LONG FORMAT**

(57)    There is provided a method of performing a RACH procedure to provide a User Equipment UE access to a network (3) in a communication system (100), the network comprising at least one base station (2), the RACH procedure comprising at least one step in which a RACH message is sent from the UE to the base station on one or more uplink channels. The message comprises an enhanced PUSCH transmission (PUSCH++) comprising a DMRS part and a PUSCH data part, the DMRS part being sent as a preamble. The method comprises transmitting the DMRS part and the PUSCH data part together in a single transmission, the enhanced PUSCH having a long length format that is the same format as a long length PRACH format or a format similar to the long length PRACH format.

1010

> Generating the DMRS part and the PUSCH data part of the PUSCH++

1012

> Transmitting PUSCH++ for a duration T

**FIGURE 10**

Processed by Luminess, 75001 PARIS (FR)

## Description

## TECHNICAL FIELD

The disclosure generally relates to digital communications and in particular to device and a method for enhanced transmission of random access signals.

## BACKGROUND

Many technical challenges have arisen to enable the transition of Mobile communication systems from the 4th generation (4G) mobile communication system to the future 5th generation (5G) mobile communication systems and beyond generations. In particular, 5G New Radio (5G NR) technology is being standardized to provide rich, reliable and hyper-connected communications.

A communications system forms a network comprising base stations providing radio coverage over a geographical area forming a cell. The cells serve User equipments (UE) through the base stations. A User equipment can communicate using base stations. A user equipment transmit data over an air or radio interface to the base stations in uplink (UL) transmissions and radio base stations transmit data over an air or radio interface to the user equipments in downlink (DL) transmissions.

Existing mobile communication systems use multiple-access technologies to support communication with multiple users by sharing available system resources.

Examples of such multiple-access technologies include orthogonal multiple access (OMA) techniques such as time division multiple access (TDMA), frequency division multiple access (FDMA) or code division multiple access (CDMA) together. OMA schemes provide orthogonal access to the users in time, frequency, code or space. However, none of these techniques can meet the high demands of future radio access systems.

Non-orthogonal multiple access (NOMA) technology has been proposed as a candidate radio access technology for the 5G networks.

NOMA differs from OMA schemes in that each user operates in the same band and at the same time where they are distinguished by their power levels. NOMA uses superposition coding at the transmitter such that the successive interference cancellation (SIC) receiver can separate the users both in the uplink and in the downlink channels.

Due to the advent of the Internet of Things with a larger number of connected devices, non-orthogonal Multiple Access (NOMA) has been studied for 3GPP Release-15 (3GPP TR 38.812: Study on Non-Orthogonal Multiple Access (NOMA) for NR V16.0.0," 2018-12). In NOMA, the receiver distinguishes signals from different User Equipments through multiple access (MA) signatures including interleaving, scrambler, spreading sequence, etc.

A key difference of NOMA schemes with respect to traditional random access (RA) is that coherent detection is assumed (channel estimation and detection). Also interference cancellation is considered.

On the contrary, the asynchronous transmission typically assumes timing offsets larger than the cyclic prefix length.

The channel structure consists of a preamble and data. NR-legacy preamble (PRACH preamble) is considered as a starting point.

MA (Multiple Access) signatures are not designed for T-F synchronization but for optimal user separation.

A Random Access (RACH) refers to a procedure where a User Equipment (UE) wants to create an initial connection with the network. In some networks, like LTE, the RACH procedure is performed in 4 steps (4 step RACH) using 4 signals transmitted between the UE and the base station.

A two-step RACH procedure (two step RACH WI) was approved for 3GPP Release 16 (ZTE, "RP-200085 Revised WID on 2-step RACH for NR," 2020) after the failure of specifying a design based on non-orthogonal multiple-access (NOMA). The two-step RACH procedure (two-step RACH) improves the overall latency of RACH procedure.

The two-step RACH procedure is performed in 2 steps using only two signals transmitted between the UE and the base station, including a message transmission (MsgA) from the User Equipment to the base station and a message reception at the User Equipment from the base station. The message MsgA transmitted from the User Equipment to the base station include a PRACH preamble transmission and a PUSCH transmission.

For the transmission of message MsgA, two preamble groups can be defined. Each preamble group is linked to a specific configuration of the PUSCH transmission of message MsgA (referred to hereinafter as MsgA-PUSCH configuration').

The MsgA-PUSCH configuration includes:

- PUSCH transmission parameters; and
- the time-frequency mapping of the PUSCH Occasions (PO).

However, the conventional two-step RACH WI procedure can have significant latency caused in the RRC connection (established for example for request, reestablishment, or handover) for time-sensitive applications, which increases of resource consumption.

There is accordingly a need for improvements in the RACH procedure.

## Summary of the disclosure

To address these and other problems, there is provided There is provided a method of performing a RACH procedure to provide a User Equipment UE access to a network in a communication system, the network comprising at least one base station, the RACH procedure comprising at least one step in which a RACH message is sent from the UE to the base station on one or more uplink channels. The message comprises an enhanced PUSCH transmission (PUSCH++) comprising a DMRS part and a PUSCH data part, the DMRS part being sent as a preamble, wherein the method comprises transmitting the DMRS part and the PUSCH data part together in a single transmission, wherein the enhanced PUSCH has a long length format that is the same format as a long length PRACH format or a format similar to the long length PRACH format.

The DMRS part may comprise User Equipment identification information used to identify the User Equipment.

The DMRS part may be used by the base-station to acquire synchronization information, the synchronization information comprising a synchronized time between the base station and the user equipment.

The DMRS part and the PUSCH data part may have different lengths and /or power levels.

In some embodiments, the base station may be associated with a cell, the length of the DMRS part and/or the length of the PUSCH data part being preconfigured by the base station based on application requirements, channel conditions and/or on the configuration of other user equipments in the cell.

In one embodiment, the format of the enhanced PUSCH transmission is a long length PRACH format selected among a PRACH Format 0, a PRACH format 1, a PRACH format 2 and a PRACH format 3.

In some embodiments, the generation of the DMRS part comprises generating at least one elementary DMRS sequence from a selected root Zadoff-Chu sequence.

In particular, N root Zadoff-Chu sequences may be used to generate the elementary DMRS.

The DMRS elementary sequence may be generated from additional sequences generated from the root Zadoff-Chu sequences by applying cyclic shifts.

The DMRS part may be generated by aggregating at least two elementary DMRS sequences.

The aggregation may consist in weighting each elementary DMRS sequence by applying a respective coefficient, which provides weighted elementary DMRS sequences, and adding the weighted elementary DMRS sequences, the sum of the squared coefficients applied to the elementary DMRS sequences being equal to 1.

The method may comprise using specific DMRS sequences to indicate that the enhanced PUSCH transmission comprises user-plane data for a Small Data Transmission.

In some embodiments, the method may comprise assigning a number of specific PUSCH++ occasions to the UE to transmit user-plane data.

In some embodiments, a small group of UEs is dedicated to a PUSCH++ occasion. This enables enhancing the performance of DMRS detection.

In some embodiments, the transmission power of the DMRS is increased to compensate for the loss of the UE detection related to the fact that the transmitted DMRS sequence is shorter than the conventional long preamble sequence.

In some embodiments, the PUSCH++ transmission uses Frequency Division Multiplexing (FDM), and multiple PUSCH++ occasions are arranged in a FDM fashion for multiple UE multiplexing.

In a PUSCH++ occasion, multiple UEs may be multiplexed in a FDM fashion.

The resources in the enhanced PUSCH (PUSCH++) may be partitioned among the UEs. Each resource may be associated with a DMRS sequence so that the base station may identify PUSCH resources' location by detecting DMRS sequence.

Within a PUSCH++ occasion, the method may comprise extracting the signal received from each user equipment, at the base station, using a zero-forcing or minimum mean square error technique. This enables handling data collision, in multiple user applications of the invention, such as in MU MIMO.

In some embodiments, a non-orthogonal multiple access (NOMA) technique may be used to multiplex multiple UEs in a PUSCH++ occasion.

There is further provided a User Equipment configured to perform a RACH procedure to access a network in a communication system, the network comprising at least one base station, the RACH procedure comprising sending a RACH message from the User Equipment to the base station on one or more uplink channels. The message comprises an enhanced PUSCH transmission (PUSCH++) comprising a DMRS part and a PUSCH data part, the DMRS part being sent as a preamble, wherein the User equipment is configured to transmit the DMRS part and the PUSCH data part together in a single transmission, wherein the enhanced PUSCH has a long length format that is the same format as a long length PRACH format or a format similar to the long length PRACH format.

There is also provided a communication system comprising a user equipment according to any of the previous features, and at least one base station, wherein the base station is adapted to configure the transmission parameters of the enhanced PUSCH transmission.

The embodiments of the disclosure therefore provide an enhanced 2-step PRACH capable of transmitting a message MsgA combining the information as preamble for the User Equipment identification, synchronization and PUSCH data in a new PUSCH format in a single transmission.

**Brief description of the drawings**

The accompanying drawings, which are incorporated in and constitute a part of this specification, illustrate various embodiments of the disclosure together with the general description of the disclosure given above, and the detailed description of the embodiments given below.

Figure 1 represents an exemplary communication system in which embodiments of the present disclosure may be implemented.

Figure 2 depicts a User Equipment implementing an enhanced RACH procedure according to the embodiments of the disclosure.

Figure 3 depicts an exemplary preamble format used for the PUSCH++ transmission corresponding to the PRACH preamble format 0.

Figure 4 illustrates the PUSCH++ transmission according to an exemplary configuration, with a cyclic prefix, a PUSCH ++ transmission and a guard time.

Figure 5 represents a PUSCH++ transmission using a number of PUSCH++ repetitions.

Figure 6 represents exemplary PUSCH++ formats using repetitions.

Figure 7 depicts exemplary elementary DMRS sequences used to generate the DMRS sequence of the PUSCH++.

Figure 8 depicts a scheme used to multiplex 4 UE in a PUSCH++ occasion in a non-interleaved FDM fashion.

Figure 9 depicts a scheme used to multiplex 4 UE in a PUSCH++ occasion in an interleaved FDM fashion.

Figure 10 is a flowchart representing a method of performing a RACH procedure, according to some embodiments.

**Detailed description**

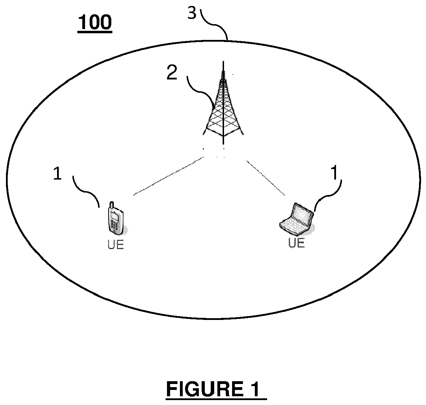

Referring to Figure 1, there is shown an exemplary communication system 100 in which embodiments of the present disclosure may be implemented.

The communication system 100 comprises a mobile communication network 3, one or more user terminals 1 (also referred to as User Equipments UEs, according to 3GPP standard), and one or more base stations 2 (also referred to as a Node, designated by a derivative of the term 'NodeB' such as gNodeB node or gNB in 5G NR). The User terminals 1 will be referred to hereinafter as User Equipments. The base station 2 is associated with a cell defining a geographical cell area. The cell associated with the base station 2 is served by the base stations. One or more user equipments may be included in the cell served by a base station 2.

The communication system 100 may be for example a wireless communication system such as a new radio (NR), a 5G and beyond 5G network.

Although reference will be mainly made to 3GPP network in the following description, the skilled person will readily understand that the embodiments of the disclosure also apply to similar or equivalent networks, such as a successor of the 3GPP network. In the following description, enclosed drawings and appended claims, the use of the term 3GPP and terms related to the 3GPP network should be interpreted accordingly. Similarly, although reference will be made to 5G NR, for illustration purpose, such reference should be interpreted as encompassing any future xG network (6G and beyond) having similar functional components.

A user equipment UE 1 is configured to transmit data to a base station 2 (such as a gNB node) on one or more uplink (UL) channels. The User Equipment 1 may receive data from the base station through one or more downlink channels (DL).

A user equipment 1 may be fixed or mobile and/or may be remotely monitored and/or controlled. A user equipment 1 may be equipped with power sources that provide power to the different components ensuring the UE operation. A User Equipment 1 may be, without limitation, a mobile phone, a computer, a laptop, a tablet, a drone, an IoT device, etc.

The communication network 3 may be any wireless network enabling IoT. Exemplary wireless networks comprise low-power short range networks and LPWANs.

Further, the communication network 3 may accommodate several pairs of user equipments 1. In such embodiments, multiple access techniques and/or network coding techniques may be used in combination with error correction codes and modulation. Exemplary multiple access techniques comprise without limitation Time Division Multiple Access (TDMA), Frequency Division Multiple Access (FDMA), Code Division Multiple Access (CDMA), and Space Division Multiple Access (SDMA), and Non-Orthogonal Multiple Access (NOMA) technology.

In some embodiments, data transmission between a UE 1 and a base station 2 in the communication system 100 may correspond to an uplink communication scenario during which the base station 2 receives data from the UE 1 through the uplink channels (the transmitter is the UE 1 and the receiver is the base station 2) or a downlink communication scenario during which the base station 2 transmit data to the UE 1 through the downlink channels (the transmitter is the base station 2 and the receiver is the UE 1).

The UEs 1 and/or the base stations 2 may be equipped with a plurality of transmit and/or receive antennas, and may implement space-time coding and/or space-time decoding techniques may be used in combination with coded modulations for encoding data both in the time and space dimensions.

A UE 1 may communicate with a base station 2 using a RRC mechanism (RCC is the acronym for Radio Resource Control).

Radio Resource Control (RRC) refers to a layer within the 5G NR protocol stack. The RRC mechanism exists only in the control plane, in a UE 1 and in the base station 2 (gNB).

A UE 1 and a base station 2 may communicate through the communication network 3, via the radio channel using the RRC control mechanism. RRC enables both parties (UE and base station) of a communication to exchange information. Further, the RRC operates within each communicating party (e.g. UE 1 and base station 2) as a control center for all of the lower layers within each system, the lower layers within the UE or the base station representing 'Radio Resources', that is resources required to enable radio communication. The RRC is configured to control all these Radio Resources (for example PHY, MAC, RLC, etc) by configuring them to enable communication between UE and the base station (for example gNB).

The behaviour and functions of RRC are defined by the current state of RRC.

For example in 5G NR, the RRC defines three states (or modes):

- A RRC Idle state (or idle mode) called RRC_IDLE state,
- A RRC connected state (or connected mode) called RRC_CONNECTED state, and
- A RRC inactive state (or inactive mode) called RRC_INACTIVE state.

The 'RRC INACTIVE' state is a state introduced in NR.

For each RRC state, applicable functions are defined according the 3GPP NR standard. Further, the state transitions between two RRC states are defined by state transitions conditions. The state transitions condition may be represented by a state machine.

The UE 1 may be in RRC idle state, after power up.

When a UE 1 wants to connect for outgoing data, calls or SMS (Short Messaging Service), the UE 1 establishes connection with the network using an initial access via RRC connection establishment procedure.

Once the RRC connection is established, the UE is in RRC_CONNECTED state.

In an application of the disclosure to a 5G NR communication system 100, the UE 1 may be in the RRC_CONNECTED state when an RRC connection has been established or in the RRC_INACTIVE state when the RRC connection is suspended. Otherwise (if no RRC connection is established), the UE 1 is in RRC_IDLE state.

The UE 1 may share a random-access channel (RACH) to access the network for communications.

For example, the RACH may be used to setup calls, to access the network for data transmissions, for initial access to a network when the UE transitions from the RRC connected state (RRC_CONNECTED) to the RRC inactive state (RRC_INACTIVE state), or for handover.

UEs in RRC_INACTIVE state may transition into RRC_CONNECTED mode using a RRC resume procedure to transmit user-plane data. This transition may require completing the RACH procedure.

RACH may be used for downlink (DL) and/or uplink (UL) data arrival when the UE device 1 is in RRC idle state (RRC_IDLE) or in the RRC inactive state (RRC_INACTIVE), or transitions to the RRC connected state (RRC_CONNECTED).

The Random Access (RACH) procedure refers to the procedure where the User Equipment (UE) 1 requires the creation of an initial connection with a network 3 using the RACH channel.

Once the RACH procedure is completed, the UE 1 may move to the connected state (RRC_CONNECTED state).

In an application of the disclosure to 5G NR, the RACH procedure may be implemented to:

- Initial access from RRC_IDLE;
- RRC Connection Re-establishment procedure;
- Handover;
- DL or UL data arrival during RRC_CONNECTED when UL synchronisation status is "non-synchronised";
- Transition from RRC_INACTIVE;
- To establish time alignment at SCell addition;
- Request for Other Synchronization Information; or
- Beam failure recovery.

The RACH procedure (also 'called Random Access process') may be performed in 4 steps (4-step RACH procedure) or 2 steps (2-step RACH procedure). To facilitate the understanding of the embodiments of the invention, the conventional RACH procedures are described.

The conventional four step RACH procedure comprises exchange of 4 signals. In a first step (step 1), the UE 1 sends a Random Access Preamble Transmission in a message Msg1 to the base station 2 to transmit the RACH preamble on a determined PRACH time-frequency resource to an appropriate beam of the base station 2. In a second step (step 2), the base station 2 sends to the UE 1 a Random Access Response in a second message Msg2 (RA response over the PDSCH channel), the random access response comprising parameters such as the random access preamble identifier, timing alignment information, initial uplink grant and a temporary cell radio network temporary identifier (C-RNTI). In a third step (step 3), the UE 1 sends a Scheduled UL Transmission in a third message Msg3, comprising uplink scheduling information, over the PUSCH channel. In a fourth step (step 4), the base station 2 sends to the UE 1 Contention Resolution in a fourth message Msg4.

Alternatively, the RACH procedure may be performed in 2 steps (2-step RACH procedure) using 2 signals exchanged between the UE and the base station (gNB), for example in a 5G NR network.

The 2-step RACH is applied to RRC_inactive and RRC-connected and RRC-IDLE states.

The RACH channel structure comprises a RACH preamble and data.

According to the conventional 2-step RACH procedure, in a first step (step 1) a first message MsgA may be sent from the UE 1 to the base station 2 on the physical random access channel (PRACH).

According to the conventional two-step RACH procedure, a first message MsgA is sent from the UE to the base station on a physical random access channel (PRACH). The message MsgA includes a PRACH preamble and PUSCH.

In a second step (step 2), the base station 2 responds with a random access response (RAR) message MsgB which may include the ID of the RACH preamble, a timing advance (TA), a back off indicator, a contention resolution messages, UL/DL grant, and a transmit power control (TPC) commands.

The following description of some embodiments of the invention will be made with reference to the 2-step RACH procedure for illustration purpose, although the invention applies to any similar RACH process such as 4-step RACH procedure comprising steps equivalent to step 1 of the 2-step RACH procedure. Indeed, step 1 of the 2-step RACH procedure is equivalent to step 1 and step 3 of the 4-step RACH procedure and step 2 of the 2-step RACH procedure is equivalent to step 2 and step 4 of the 4-step RACH procedure.

The conventional two-step RACH procedure comprises:

- Transmitting a message MsgA from the UE1 to the base station 2; and
- Transmission of a message MsgB from the base station 2 to the UE1.

The message MsgA comprises in the conventional RACH procedure:

- A PRACH Preamble Transmission; and
- A PUSCH Transmission.

The transmission of the PRACH preamble by the UE 1 to the base station 2 comprises a step of selecting a Preamble and a step of transmitting the selected Preamble (similarly to the 4-Step RACH procedure).

The PRACH preamble selection comprises selecting a preamble among a number K of available preambles (for example K=64 in 5G NR).

In response to the msgA transmission, the UE 1 expects a Response from the base station 2 comprising the MsgB information.

PRACH Preamble transmission is conventionally made within a configurable subset of RACH slots that repeat itself every RACH configuration period, within a cell.

Each RACH Slot comprises a number of RACH occasions.

A RACH Occasion (RO) refers to resources specified in time and frequency domain that are available for the reception of RACH preamble, and indicates how many different resources there are for each RACH slot. Therefore, within each RACH Slot, there may be a number of RACH occasions which indicates how many different resources there are for the RACH slot.

A PRACH Occasion specifies when to send PRACH. In NR, the time and frequency resource on which a PRACH preamble is transmitted is defined as a PRACH occasion.

The message MsgA comprises a message payload having a payload size.

In existing 2-step RACH procedures, the PRACH preamble and the PUSCH are sent in two separate transmissions and cannot be transmitted in the same slot, so that latency can appear in the RRC connection and the resource consumption might increase.

Embodiments of the present disclosure provide a UE 1 and a method implemented in a UE1 to perform an enhanced RACH procedure, in which the PRACH preamble and the PUSCH are transmitted in a single transmission instead of using two separated transmissions like in the conventional 2-step or 4-step RACH procedures. As used herein, a single transmission of a message refers to a contiguous allocation of resources in time domain. If the message is split into multiple parts with non-contiguous time resources, i.e. if there is a time gap between the different parts, the message is transmitted via multiple transmissions.

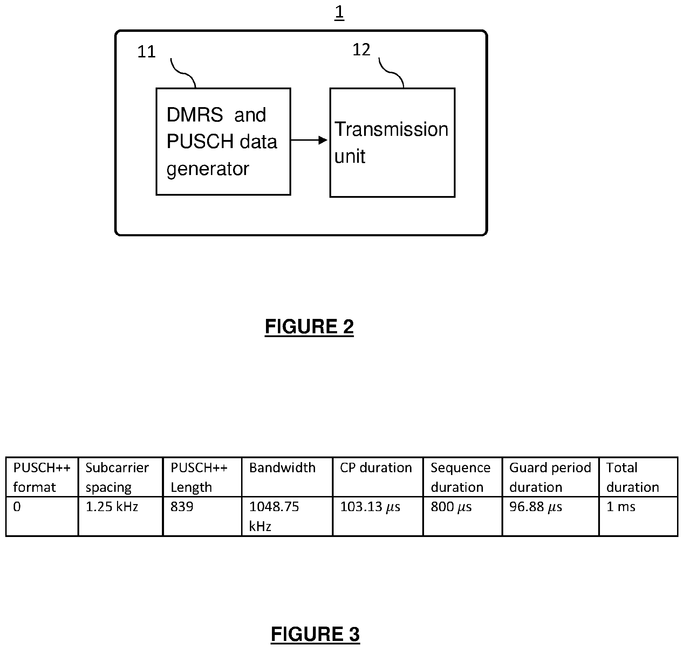

Figure 2 depicts a User Equipment 1 implementing an enhanced RACH procedure according to the embodiments of the disclosure.

The User Equipment 1 comprises a DMRS and PUSCH data generator 11 configured to generate a DMRS part and the PUSCH data part of the PUSCH++ using RRC parameters (DMRS stands for DeModulation Reference Signal). The RRC parameters may be previously configured by the base station 2 to which the PUSCH++ transmission (also referred to herein as 'enhanced PUSCH transmission') is to be sent. The DMRS serves as the preamble of the PUSCH++ transmission and is further used for PUSCH demodulation.

Advantageously, the User Equipment 1 comprises a transmission unit 12 configured to transmit both the DMRS part and the PUSCH data of the PUSCH ++ to the base station in a single transmission corresponding to as same time slot.

DMRS (DeModulation Reference Signal) represents a special type of physical layer signal which operates as a reference signal for decoding PUSCH. DMRS refers to the uplink user's shared channel Demodulation Reference Signal (DMRS) that is transmitted in each resource block allocated to the user.

According to the embodiments of the invention, DMRS is used as a preamble comprising UE detection information enabling the base station to recognize the UE identity (UE detection information).

According to the embodiments of the invention, the transmission of the message MsgA of the 2-step RACH procedure therefore comprises transmitting an enhanced PUSCH++ comprising:

- DMRS data as a preamble, and
- PUSCH data,

Advantageously, the DMRS data and the PUSCH data are transmitted together at the same time in a time slot.

The DMRS data are used in the PUSCH++ to allow the PUSCH++ have the same format as the conventional PUSCH. The DMRS data part can comprise DMRS PUSCH or alternatively a sequence for PRACH preamble.

The PUSCH data part in PUSCH++ may comprise message data similar to the PUSCH data transmitted in the conventional 2-step procedure such as message data for RRC connection request, reestablishment, and/or handover.

The PUSCH data therefore comprise data to carry RRC signalling messages, UCI (uplink Control Information) and/or application data (such as Small Data transmission SDT in a 3GPP application of the invention. The uplink RRC messages are carried using PUSCH. The PUSCH channel may further comprise user information data.

The PUSCH data may carry both the user data and the control signal data (such as MIMO related parameters and transport format indicators). UCI may be transmitted using PUSCH instead of PUCCH when there is RRC and application data to be transferred at the same time instant.

Compared to the conventional 2-step RACH procedure, the embodiments of the disclosure allow more efficient use of the Uplink (UL) resources and a decrease of MsgA transmission's time because MsgA is transmitted in a single transmission instead of two transmissions in different time slots. The transmission of PUSCH++ is advantageously shorter or consumes less resources (and is therefore more resource-efficient) than the equivalent prior art MsgA transmission.

The embodiments of the disclosure also enable a flexible configuration of DMRS for the UE detection and data part.

The amount of resources for the PUSCH++ may be configured. The resources for the PUSCH++ may be set in time and frequency. The time part of the PUSCH++ resources indicates the duration of the PUSCH++ and the frequency part of the PUSCH++ resources indicate its bandwidth.

A PUSCH++ Occasion (PO) associated with a PUSCH++ transmission is defined by a frequency resource and a time resource and is associated with a DMRS resource (DRMS stands for 'DeModulation Reference Signal'). A PUSCH++ occasion therefore provides time and frequency resources where a UE can send PUSCH++ in the PUSCH++ transmission.

Each DMRS preamble is mapped to a specific PUSCH++ Occasion, in frequency and time domain.

By detecting the DMRS preambles of the PUSCH++, the base station 2 can therefore identify exactly the corresponding PUSCH++ Occasion.

The message payload in PUSCH++ may depend on the event ('triggering event') that triggered the RACH procedure or the SDT procedure. The triggering event may be for example an initial access, a handover, a RRC resume request, etc. The payload size may be for example equal to 56 bits or 72 bits. Larger payloads may be used for the small data transmission (SDT) use case. In 3GPP Release 17, Small Data Transmission (SDT) WI was approved and is driven by radio layer RAN2 (RAN stands for Radio Access Network) to reduce the latency for transmission of small packets if the UE is in a RRC_INACTIVE state.

In some embodiments, the DMRS part and/or the PUSCH data part may have different lengths and/or power levels having values selected so as to serve applications with different requirements for UE detection and data decoding.

The enhanced PUSCH format, PUSCH++, provided for transmission of the message MsgA of the 2-step RACH procedure, is accordingly used to transmit the information for UE detection, synchronization and the RRC connection data in the same transmission.

The enhanced PUSCH (PUSCH++) has a long length format that is the same format as the long length PRACH format (also called long length PRACH preamble format) or a format similar to the long length PRACH format. This means that the PUSCH++ format at least share the properties of the long length PRACH preamble format according to which the PUSCH++ comprises a sub-carrier spacing (SCS) field that is a lower sub-carrier spacing, and a cyclic prefix (CP) that is a longer cyclic prefix (CP) than the SCS and the CP of a conventional PUSCH.

In one embodiment, the PUSCH++ may have the same format as a long length preamble PRACH format (also referred to hereinafter as 'long PRACH format', 'long preamble PRACH format' or 'long preamble format'). Long PRACH preambles are typically based on a sequence length L equal to 839 Resource elements. The length of the PUSCH++ may be equal to 839 REs or superior to 839 REs by extending it to other higher lengths.

As used herein, a long length PRACH format (or more simply 'long PRACH format') refers for example to a predefined PRACH preamble format, for example as supported in 5G NR. Existing long PRACH preamble formats in 5G NR use 4 format types including Format 0 (the 4 types of preamble formats currently supported in 5G NR are called Format 0, Format 1, Format 2, Format 3). The PUSCH++ may have one of the PRACH preamble formats among Format 0, Format 1, Format 2 and Format 4, or any equivalent format.

The long preamble formats have differences in the time domain, and define different Cyclic Prefix length, Sequence Length, Guard Period length and/or number of repetitions of the PUSCH++ preamble.

The long preamble formats take longer to transmit compared to other channels (e.g. PUSCH, PDCCH, etc) because theirs sub-carrier spacing is lower, e.g. 1.25kHz or 5kHz, as opposed to 15kHz, 30kHz, etc, which results in a longer OFDM symbol time.

The PUSCH++ has therefore a lower sub-carrier spacing (SCS) and a longer CP than conventional PUSCH.

Figure 3 depicts an exemplary preamble format used for the PUSCH++ transmission corresponding to the PRACH preamble Format 0. However, the PUSCH++ is not limited to such PRACH format 0 and may use other long PRACH formats, such as the existing PRACH long preamble formats or any other suitable long preamble format.

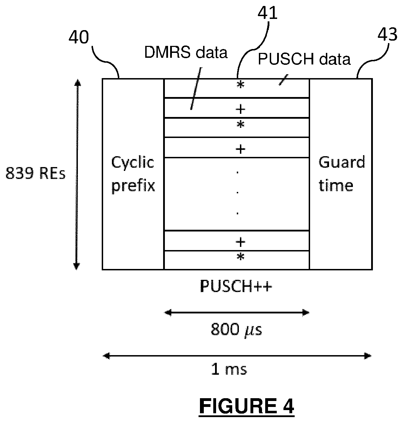

Figure 4 illustrates the PUSCH++ transmission according to an exemplary configuration, with a cyclic prefix 40, a PUSCH ++ transmission 41 and guard time 43. The DMRS is represented by the sign "+" while the PUSCH data are represented by the sign "*". Such representation will be used in other figures.

As shown in figure 4, according to the embodiments of the invention, the PUSCH++ transmission replaces the conventional PRACH preamble transmission and PUSCH transmission in MsgA.

The RACH MsgA Transmission comprises:

- a cyclic prefix (CP) 40,
- the PUSCH++ transmission 41 comprising the DMRS data and the PUSCH data, and
- A Guard Time 43 which refers to an unused portion of time up to the end of the last subframe occupied by the PUSCH++.

The PUSCH++ is defined by a given length L corresponding to a number of Resource Elements (REs), a given duration D and a given Subcarrier Spacing (SCS). The PUSCH++ comprises the DMRS part and the PUSCH data part in the number of Resource Elements defining its length. For example in the use case of Figure 4, the PUSCH++ has a length of 839 that accounts for 839 resource elements (REs) in a duration of 800 $\mu$s with SCS of 1.25 kHz. The PUSCH++ comprises the DMRS part and the PUSCH part data in 839 REs.

The DMRS part carried by the PUSCH++ comprises information that may be used by the base station 2 (for example gNB) to detect the UE 1 and/or calculate timing advance (TA) as a preamble sequence.

The PUSCH Data part in PUSCH++ of the RACH message MsgA may include the message about the RRC connection.

Therefore, the RACH MsgA according to the embodiments of the disclosure only contains PUSCH++ with a DMRS part and a PUSCH data part, sent at the same time in a same transmission, while the conventional 2-step RACH procedure contains the PRACH preamble and the PUSCH transmission sent in two separate transmissions (starting in different time slots). According to the embodiments of the disclosure, the DMRS part of the PUSCH++ assumes the function of preamble while the PUSCH data part of the PUSCH++ may carry the same content as the conventional PUSCH transmission in the conventional 2-step RACH procedure.

The PUSCH++ is transmitted like a conventional PRACH, in a single long modulation symbol (for example OFDM symbol), with lower subcarrier spacing and a longer CP.

The DMRS part and the PUSCH data part are transmitted together in PUSCH++ so that the RACH message MsgA is transmitted in a single transmission instead of two transmissions in different slots where one transmission is for preamble transmission and one transmission is for data transmission in the conventional 2-step RACH procedure.

In the example of Figure 4, in the PUSCH++ of length of 839, there are 419 REs used for DMRS and 420 REs used for PUSCH data. Such lengths of DMRS and PUSCH data are only provided as a non limiting example.

The DMRS configuration may be of Type 1. In a DMRS configuration Type 1, the DMRS is allocated every second subcarrier.

The length of the DMRS part and the length of the PUSCH data part of the PUSCH++ data may be based on (for example defined, selected, determined or predetermined based on) the requirements of the UE detection and of data decoding of different applications and/or channel conditions. In one embodiment, to determine the length of the DMRS part and/or the length of the PUSCH data part, the base station 2 may configure the DMRS and/or PUSCH data resources in the PUSCH++ for the UE 1 based on the requirements of the UE detection and/or data decoding, and/or channel conditions and/or the configuration of other UEs in the cell.

Therefore, in some embodiments, the DMRS part of the PUSCH++ serves as the preamble of the PUSCH++ and may be used to identify the UE 1 and/or synchronize time between the base station 2 (for example gNB) and the UE 1, and/or to identify the data Resource Elements for PUSCH data in the orthogonal multiplexing of the UE 1.

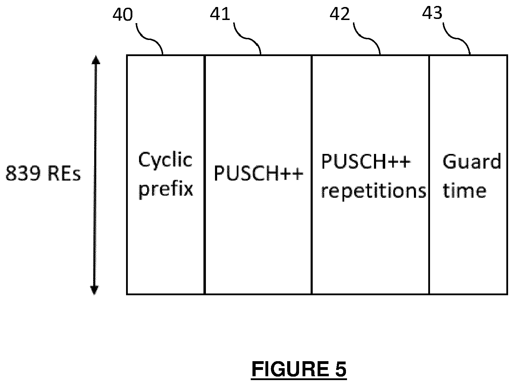

In some embodiments, the PUSCH++ may be repeated using a number of repetitions 50, as depicted in Figure 5.

This is particularly advantageous in applications of the invention in which the transmission of the RACH is performed with high reliability requirements, such as in Ultra Reliable Low Latency Communications (URLLC). In such embodiments, to enable the single PUSCH++ transmission satisfy the high reliability requirement, the base station 2 (gNB) may configure the UE's transmission so that PUSCH++ be transmitted with repetitions 50, according to adapted PUSCH++ formats. In the example of figure 5, the PUSCH++ transmission with repetitions has a length of 839 REs.

Each PUSCH++ format defines a given subcarrier spacing corresponding to the spacing between two subcarrier, a PUSCH ++ length corresponding to the length of the PUSCH++ in terms of REs, a given bandwidth corresponding to the bandwidth of the PUSCH++, a given CP duration corresponding to the duration of the CP, a given Guard period duration corresponding to the duration of the Guard time 43, a number of repetitions corresponding to the number of PUSCH++ repetitions and a total duration corresponding to the added durations of the CP, of the PUSCH++, of the PUSCH++ repetitions if repetitions are used, and of the Guard time 43.

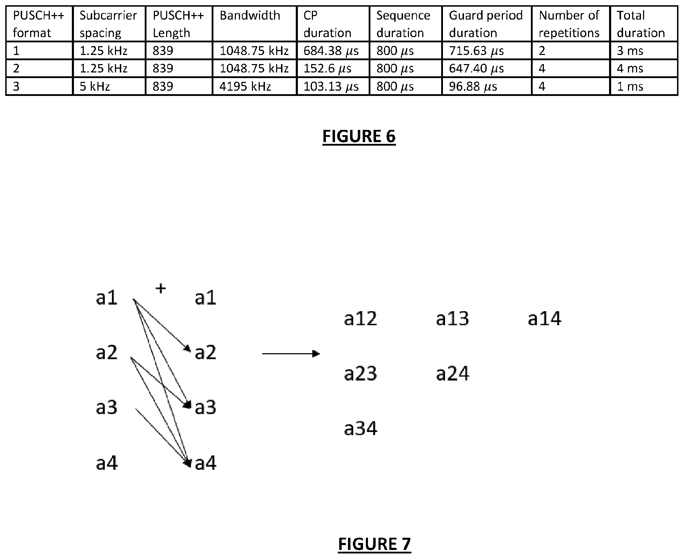

The PUSCH++ formats in embodiments using repetitions may be for example one of the PRACH long formats such as PRACH Format 1, PRACH Format 2, or PRACH Format 3 as illustrated in Figure 6.

The sequence duration corresponds to the added durations of the PUSCH++ 41 and of the PUSCH ++ repetitions 42.

After transmission in a single time slot of the PUSCH++, the PUSCH++ transmission may be received by the base station 2. In response to the reception at the base station 2 of the PUSCH++ transmission, the base station 2 may be configured to detect the DMRS part of the PUSCH++ transmission and decode the PUSCH data included in the PUSCH++ transmission of MsgA. Several cases may occur depending on whether the DMRS part has been successfully detected or not, and the whether the PUSCH data part has been successfully decoded or not.

In a first case, if the DMRS part is successfully detected and the PUSCH data part of the PUSCH++ transmission is successfully decoded, the base station 2 may send a successful Random Access Response (RAR) with a Timing Advance (TA) command to the UE 1. The Timing Advance (TA) command is sent by Base Station 2 to UE 1 to adjust its uplink transmission (i.e. in order to have the UE 1 send UL symbols). The UE 1 may then acquire the TA and terminate the RACH procedure.

In a second case, if the DMRS part is successfully detected but the decoding of PUSCH data part of the PUSCH++ transmission fails, the base station 2 may acquire the UE identity. The base station 2 may further send to the UE 1 a fallback Random Access Response (RAR) with the TA command and an Uplink grant (i.e. resource allocation for the transmission from the UE to the base station) for a retransmission of the payload data in an enhanced PUSCH++ transmission or in a conventional PUSCH transmission.

In a third case, if the detection of the DMRS part fails, the base station 2 will send no RAR to the UE 1 because it does not know about the UE 1's transmission. To address this case, a timer may be set when the UE 1 transmits the PUSCH++ and if the UE 1 does not receive any RAR when the time set by the timer expires, the UE 1 may retransmit the PUSCH++ to attempt random access again. The UE 1 may change one or more PUSCH++ parameters such as the power transmission in the retransmission in order to increase the detection probability

In a fourth case, if the base station 2 detects multiple identical DMRS sequences from several user equipments 1, the base station 2 may not send any RAR to the UE 1 and transmit instead a backoff indication to the UE 1. In response to the receipt of the backoff indication, the UE 1 may attempt random access again after backoff time.

In some embodiments, the DMRS part (forming preamble) of the PUSCH++ may be generated from a Zadoff-Chu (ZC) sequence. Zadoff-Chu sequences have the property that cyclically shifted versions of themselves are orthogonal to one another.

A generated Zadoff-Chu sequence that has not been shifted is referred to as a root sequence.

The generation of the DRMS part of the PUSCH++ may comprise:

- acquiring a Zadoff-Chu sequence among a plurality of root ZC sequences

- applying a cyclic shift to the acquired ZF sequence to generate the DMRS sequence.

The root sequence $u$ may be defined for example as:

$$u = \left( f_{gh} + n_{ID}^{RS} \right) \bmod 30 \ (1)$$

In equation (1), the function $f_{gh}$ denotes a group hopping function (having a 0 or 1 value) and $n_{ID}^{RS}$ is the identity of PUSCH configured by MAC layer or the scrambling identity for antenna ports or the identity of the cell. From equation (1), there are 30 values of u (as defined in 3GPP 38.211 standard).

The generation of the DMRS sequence may be based on the following equation (2):

$$r_{u,v}^{(\alpha,\delta)}(n) = \bar{r}_{u,v}(n), \quad 0 \le n < M_{ZC} \quad (2)$$

In equation (2):

- $M_{ZC}$ denotes the sequence length;

$$- \bar{r}_{u,v}(n) = x_q(n \bmod N_{zc})$$

$$- x_q(m) = e^{-j\frac{\pi qm(m+1)}{N_{ZC}}}$$

$$- q = \lfloor \bar{q} + 1/2 \rfloor + v.(-1)^{\lfloor 2\bar{q} \rfloor}$$

$$- \bar{q} = N_{zc}.(u+1)/31$$

Therefore, for each value of u, a sequence is determined and a cyclic shift is applied to to that sequence.

Such generation of the DMRS data enable the PUSCH++ have the same DMRS format as the conventional PUSCH.

In such embodiments, there are therefore 30 root ZF sequences used for the DMRS generation.

It should be noted that although the above example has been described in relation with 30 values of the root sequence u, the invention is not limited to a root sequence u comprising 30 values and encompasses other numbers of the values of *u*.

The DMRS part in the PUSCH++ operates similarly to the PRACH preamble in the conventional RACH procedure as it is used to detect the UE 1. In a 3GPP application of the invention, in a RACH occasion in a cell, 64 preamble sequences are used in the conventional RACH procedure to generate the PRACH preamble.

In order to support the UEs present in the same cell or in different cells, and in order to increase the DMRS sequence capacity and the cell range, while keeping the reasonable re-use pattern size, in the PUSCH++ transmission according to the embodiments of the disclosure, additional DMRS sequences may be generated by applying cyclic shift to the root sequences.

In some embodiments, the more additional DMRS sequences need to be generated, the smaller the cyclic shifts and it may cause a degradation of DMRS detection performance. In such embodiments, to increase the DMRS sequence capacity can be increased without decreasing cyclic shifts and affecting DMRS detection performance, the generation of a DMRS sequence may use a scheme consisting of generating at least two elementary DRMS sequences as described hereinbefore and then aggregating (i.e. adding) the at least two elementary DMRS sequences to generate the DRMS sequence.

In some embodiments, the at least two elementary DMRS sequences are first weighted using respective power coefficients, such that the sum of squared power coefficients is equal to 1, and then adding the weighted elementary DMRS sequences to generate a new aggregating sequence forming the DMRS sequence of the PUSCH++;

For example, considering two elementary DMRS sequences a1 and a2 generated from one or two root sequences by applying cyclic shift, the DMRS sequence of the PUSCH++ can be obtained by weighting the two elementary DMRS sequences with power coefficients, respectively denoted $\alpha 1$ and $\alpha 2$ (which provides weighted elementary DMRS sequences $\alpha 1 \times \alpha 1$ and $\alpha 2 \times \alpha 2$) such that $\alpha 1^2 + \alpha 2^2 = 1$, and then adding the weighted elementary DMRS sequences to generate a new aggregating sequence b forming the DMRS sequence of the PUSCH++ defines as:

$$b = \alpha 1 \times a1 + \alpha 2 \times a2$$

Advantageously, to optimize the detection performance of the aggregated sequences, the two elementary DMRS sequences combined to generate the PUSCH++ DMRS sequence are different.

By combining two elementary DMRS sequences to generate the DMRS sequence used in the PUSCH++, if there are N elementary DMRS sequences, the number of possible DMRS sequences is increased from N to (N-1)*N/2 sequences.

Figure 7 depicts exemplary elementary DMRS sequences used to generate the DMRS sequence of the PUSCH++.

As shown in Figure 7, with 4 elementary DMRS sequences a1, a2, a3 and a4, it is possible to generate 6 sequences a12, a13, a14, a23, a24, a34 by combining the elementary sequences

The DMRS sequences obtained by combining elementary DMRS sequences have a similar peak to average power ratio and also provide a similar detection performance as DRMS sequences generated from a unique elementary DMRS sequence.

By combining two DMRS elementary sequences, only 13 sequences are needed in a cell to obtain 64 sequences in a random access occasion, while the conventional RACH procedure uses 64 sequences. The DMRS combination scheme (generation from combination of two elementary DMRS sequences) therefore allows a larger re-use pattern size to support the cells with larger cell range that have more neighbor cells.

In a PUSCH++ having a length of 839 REs, the DMRS length is shorter than 839 because resource in PUSCH++ are shared between the DMRS and the PUSCH data. Therefore, the DMRS sequence in PUSCH++ is shorter than a long preamble sequence with length of 839 used in a conventional 2-step RACH procedure. To avoid a decrease of the detection performance related to the shorter length of the DMRS, in some embodiments, a PUSCH++ occasion may be dedicated to a small group of user equipments 1 (for example and without limitation a group of 4 UEs may be dedicated to a PUSCH++ occasion). In the conventional 2-RACH procedure, 64 sequences are used in a cell to support a maximum number of 64 UEs, while according to this embodiment of the disclosure, a group of UEs 1 with a small number of UEs (strictly inferior to 64) is dedicated to a PUSCH++ occasion. This has particular advantages in applications of the invention where the UEs have high reliability requirement such as Ultra-reliable low-latency communication (URLLC) transmission.

In the PUSCH++ occasion, the number of DMRS sequences is less than 64 so that the base station 2 (e.g. gnB) needs to do less cross correlations to detect the transmitted DMRS sequence. Accordingly, the performance of DMRS detection is improved, and the complexity of DMRS detection is reduced (because a smaller number of cross correlations is performed).

In some embodiments, a cyclic shift, larger than the cyclic shift used when a PUSCH++ occasion is used for 64 UEs, may be used to generate the elementary DMRS sequences from a root ZC sequence. This enables further improving the performance of DMRS detection when a smaller number of DMRS sequences is used in a PUSCH++ occasion.

In some embodiments, the performance of DMRS detection may be improved and the loss due to the use of a shorter DMRS sequence may be compensated by increasing the power of DMRS transmission.

The base station 2 configures the time and frequency resources of PUSCH++ transmission for a UE 1 through RRC parameters as used in the conventional PUSCH. In some embodiments, the format of PUSCH++ transmitted by a user equipment 1 may be configured by the base station 2 using a new RRC parameter referred to herein as "PUSCHplus-formatindex".

In embodiments where the lengths of the DMRS part and/or the PUSCH data parts of the PUSCH++ vary, the base station 2 may further configure the DMRS length and mapping through a new RRC parameter, referred to herein as "dmrs-PUSCHplus-mapping", so that the rest of PUSCH++ resources will be used for the PUSCH data part of the PUSCH++.

Modulation and Coding Scheme (MCS) for data in the PUSCH++ may be configured with the same RRC MCS parameter as the conventional PUSCH. The MCS parameter (MCS stands for Modulation and Coding Scheme) defines the numbers of useful bits which can be carried by one symbol. In 5G NR, a symbol is defined as Resource Element (RE) and the MCS defined as how many useful bits can be transmitted per Resource Element (RE).

The DMRS part and the PUSCH data part of the PUSCH++ may have different transmission powers. The transmission powers of the DMRS part and of the PUSCH data part of the PUSCH++ may be configured by the base station 2 using new RRC parameters referred to herein as "DMRS-PUSCHplus-powercontrol" and "Data-PUSCHplus-powercontrol".

The base station 2 may further configure the cyclic shift of the DMRS through a new RRC parameter, referred to herein as "cyclicshift-PUSCHplus" and used to generate the number of DMRS sequences from a selected root ZC sequence. The cyclic shift is chosen to have an appropriate root ZC sequence reuse pattern to support different cell ranges. The base station 2 may preassign the DMRS sequence to a UE 1 in a PUSCH++ occasion. On top if configuring the cyclic shift, the base station 2 may further indicate to the UE 1 the root ZC sequence selected to generate the DMRS. The base station 2 may send the index of the selected root sequence through a new RRC parameter referred to herein as "DMRS-PUSCHplus-rootsequenceindex".

A further new RRC parameter referred to herein as "ra-PUSCHplusTimer" may be used by the base station 2 to set the initial value of the counter of the timer used to monitor receipts of RAR by the UE. When the counter reaches zero and the UE does not receive RAR from the base station 2, in case the base station 2 cannot detect DMRS in the PUSCH++, the UE1 will retransmit the PUSCH++ in the closest PUSCH++ occasion.

In an application of the invention to Multi-User MIMO, UE multiple access in the PUSCH++ may be handled by the communication system 100. In such application, to multiplex multiple UEs and handle data collision, within a PUSCH++ occasion, the signal of each user may be extracted by using zero-forcing (ZF) or minimum mean square error (MMSE) equalization techniques at the base station 2 acting as the receiver. If a UE 1 has more than one antenna, each user may use three main transmission strategies among beamforming, space-time coding and spatial multiplexing.

Alternatively, to multiplex the UEs in a PUSCH++ occasion, a partitioning of the resources for data into orthogonal resources may be performed, in a FDM (Frequency Division Multiplexing) fashion, among the UEs using that PUSCH++ occasion to transmit PUSCH++. For example, considering four sets of orthogonal resources, where the resources belonging to one set are either consecutive PUSCH resources or where every 4th PUSCH resource belongs to the same set, a one-to-one mapping may be defined between the DMRS sequences and the PUSCH resource set. This mapping scheme results in fewer PUSCH resources available for each set. However, the performance is still acceptable if the payload and the number of the multiplexed UEs are small.

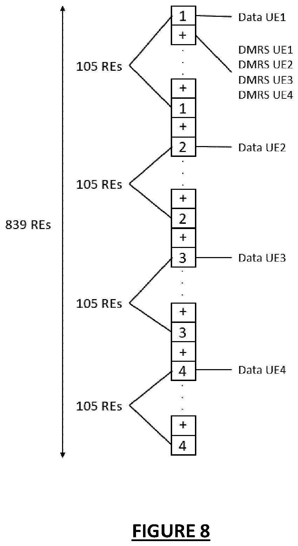

Figure 8 depicts a scheme used to multiplex 4 UE in a PUSCH++ occasion in a non-interleaved FDM fashion, where the resources belonging to one set are consecutive PUSCH resources. As shown in figure 8, in a PUSCH++ occasion for long PUSCH++ format, there are 839 REs and four UEs (UE1, UE2, UE3, and UE4) that can transmit PUSCH++ in this PUSCH++ occasion. Each UEi (i=1 to 4) is assigned to a DMRS sequence with a DMRS length of 419. 420 REs for data (PUSCH data) are partitioned among the four UEs. The first set of 105 REs for data are allocated to the first UE (UE1). The second set of 105 REs for data (PUSCH data) are allocated to the second UE (UE2). The remaining two sets of 105 REs for data (PUSCH data) are similarly allocated to the rest of the UEs (UE3 and UE4. The location of the PUSCH data REs of each UEi may be associated with one or more DMRS sequences (DMRS UE1, DMRS UE2, DMRS UE3, DMRS UE4). The base station 2 may therefore detect the DMRS sequence to determine the location of PUSCH data resources of a UE 1.

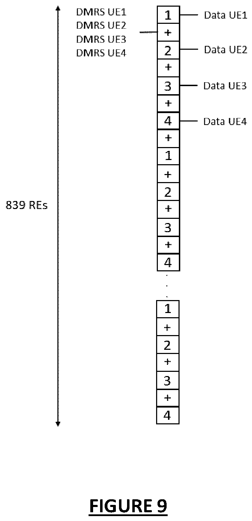

Figure 9 depicts a scheme used to multiplex 4 UE in a PUSCH++ occasion in an interleaved FDM fashion, where every 4th PUSCH resource belongs to the same set. As shown in figure 9, in a PUSCH++ occasion for long PUSCH++ format, there are 839 REs and four UEs (UE1, UE2, UE3, and UE4) that can transmit PUSCH++ in this PUSCH++ occasion. Each UEi (i=1 to 4) is assigned to a DMRS sequence with a DMRS length of 419. 420 REs for data (PUSCH data) are partitioned among the four UEs. The first UE (UE1) has 105 REs in the $1^{st}$, $5^{th}$, $9^{th}$, etc. positions of 420 REs for PUSCH data. The second UE (UE2) has 105 REs in the $2^{nd}$, $6^{th}$, $10^{th}$, etc. positions of 420 REs for PUSCH data. The third UE (UE3) has 105 REs in the $3^{rd}$, $7^{th}$, $11^{th}$, etc. positions of 420 REs for PUSCH data. The first UE (UE1) has 105 REs in the $4^{th}$, $8^{th}$, $12^{th}$, etc. positions of 420 REs for PUSCH data. The location of each PUSCH resource is mapped with a DMRS sequence of a UE. The base station 2 may therefore detect the DMRS sequence to determine the location of PUSCH data resources of a UE 1.

In another embodiment, to multiplex UEs in a PUSCH++ occasion, non-orthogonal multiple access (NOMA) may be used where the UEs are identified through their respective DMRS sequences and the associated data transmitted with a specific signature to allow for multiplexing of multiple UEs 1. To avoid DMRS/signature collision, DMRS sequences/signature may be assigned prior to transmission.

Non-orthogonal multiple access (NOMA) can be used to multiplex UE in a PUSCH++ occasion.

The PUSCH++ may be used to transmit user-plane data when the message MsgA is used for Small Data Transmission. User-plan data is included in the PUSCH data part of PUSCH++. If the UE 1 is in an RRC_INACTIVE state, the UE may transmit data in the PUSCH++ without a need for changing from the RRC_INACTIVE state to the RRC_CONNECTED state. The use of MsgA for Small Data Transmission is indicated from the UE 1 to the base station 2 through the specific DMRS sequences of the PUSCH++. Several DMRS sequences may be configured by the base station 2 so that they be only used if the PUSCH++ contains user-plane data in Small Data Transmission.

Alternatively, to indicate the use of MsgA for Small Data Transmission, the UE 1 may be dedicated to specific PUSCH++ occasions to transmit user-plane data.

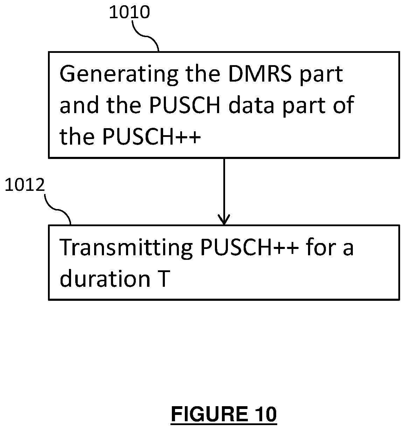

Figure 10 is a flowchart representing a method of performing a RACH procedure to provide the UE 1 access to the network 3 according to embodiments of the invention. Figure 10 specifically shows the first step (Step 1) of the 2-step RACH procedure corresponding to message MsgA (this alternatively applies to the equivalent steps Step 1 and Step 3 of the 4-step RACH procedure or to any equivalent RACH procedure comprising at least one step in which at least one RACH message (MsgA for 2-step RACH procedure) is sent from the UE 1 to the base station 2 on one or more uplink channels.

The message MsgA comprises an enhanced PUSCH data transmission (PUSCH++ transmission) comprising a DMRS part and a PUSCH data part. The DMRS part forming the preamble.

According to the embodiments of the invention, the method comprises generating in step 1010 the DMRS preamble for example using a ZC sequence and the PUSCH data part, using RRC parameters to determine the parameters of the DMRS and PUSCH data parts such as one or more RRC parameters among:

- the RRC parameters that indicated the time and frequency resources of PUSCH++ transmission;
- the PUSCHplus-formatindex RRC parameter that indicate the format of PUSCH++ transmission (for example PRACH FORMAT0);
- the dmrs-PUSCHplus-mapping RRC parameter that indicate the DMRS length and the length mapping to determine the PUSCH++ resources that are to be used for the PUSCH data part of the PUSCH++;
- The Modulation and Coding Scheme (MCS) RRC parameter indicating the numbers of useful bits carried by one symbol;
- The DMRS-PUSCHplus-powercontrol and the Data-PUSCHplus-powercontrol RRC parameters which provide the transmission powers of the DMRS part and of the PUSCH data part of the PUSCH++;
- The cyclicshift-PUSCHplus RRC parameter to determine the cyclic shift that is to be used to generate the DMRS sequence from a selected root ZC sequence; and/or
- The DMRS-PUSCHplus-rootsequenceindex RRC parameter which indicates to the UE 1 the index of the root ZC sequence selected to generate the DMRS.

In step 1012, the PUSCH++ is transmitted (comprising both DMRS preamble and the PUSCH data part of the PUSCH++) for a duration T, with or without PUSCH++ repetitions depending on the application of the invention.

The base station 2 may comprise a receiving unit configured to receive the signal transmitted by the User Equipment and decode the received signal to recover the original data. It should be noted that the base station 2 implements a reverse processing of the processing implemented in transmission.

The UE 1 may be any physical internet-enabled device/object provided with required hardware and/or software technologies enabling communication over Internet. The UE 1 may be any standard internet connected-devices such as desktop computers, servers, virtual machines laptops, smart-phones, tablets. In some applications of the disclosure, the UE 1 may be any IoT/M2M device or connected device operating in an IoT/M2M net-

work such as medical devices, temperature and weather monitors, connected cards, thermostats, appliances, security devices, drones, smart clothes, eHealth devices, robots, and smart outlets.

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the disclosure. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail.

The communication system 100 according to the embodiments of the disclosure may be used in various applications such as Massive MTC (mMTC) to provide connectivity to a large number of devices that transmit sporadically a low amount of traffic, Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

For example, in IoT applications, the communication system 100 may be a wireless network, for example a wireless IoT/M2M network representing low energy power-consumption/long battery life/low-latency/low hardware and operating cost/high connection density constraints such as low-power wide area networks and low-power short-range IoT networks.

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

Additional advantages and modifications will readily appear to those skilled in the art. The disclosure in its broader aspects is therefore not limited to the specific details, representative methods, and illustrative examples shown and described.

Further, the embodiments of the invention are not limited to the 2-step RACH procedure and similarly apply to any RACH procedure including the transmission of a message similar to message MsgA from the UE 1 to the base station 2, such as the 4-step (message Msg1 transmission) from the UE 1 to the base station.

Also, although the disclosure has particular advantages when used for Small Data Transmission (SDT), the embodiments of the disclosure may apply to other types of data transmissions.

## Claims

1. A method of performing a RACH procedure to provide a User Equipment UE access to a network (3) in a communication system (100), the network comprising at least one base station (2), the RACH procedure comprising at least one step in which a RACH message is sent from the UE to the base station on one or more uplink channels, wherein said message comprises an enhanced PUSCH transmission (PUSCH++) comprising a DMRS part and a PUSCH data part, the DMRS part being sent as a preamble, wherein the method comprises transmitting the DMRS part and the PUSCH data part together in a single transmission, wherein the enhanced PUSCH has a long length format that is the same format as a long length PRACH format or a format similar to the long length PRACH format.

2. The method according to claim 1, wherein the DMRS part comprises User Equipment identification information used to identify the User Equipment.

3. The method according to claim 1, wherein the DMRS part is used by the base-station (2) to acquire synchronization information, the synchronization information comprising a synchronized time between the base station and the user equipment.

4. The method according to any preceding claim, wherein the DMRS part and the PUSCH data part have different lengths and /or power levels.

5. The method according to claim 4, wherein the base station (2) is associated with a cell, and wherein the length of the DMRS part and/or the length of the PUSCH data part are preconfigured by the base station (2) based on application requirements, channel conditions and/or on the configuration of other user equipments in said cell.

6. The method of any preceding claim, wherein the format of the enhanced PUSCH transmission is a long length PRACH format selected among a PRACH Format 0, a PRACH format 1, a PRACH format 2 and a PRACH format 3.

7. The method of any preceding claim, wherein the generation of the DMRS part comprises generating at least one elementary DMRS sequence from a selected root Zadoff-Chu sequence.

8. The method of claim 7, wherein N root Zadoff-Chu sequences are used to generate the elementary DMRS.

9. The method of any preceding claim 7 and 8, wherein the DMRS elementary sequence is generated from additional sequences generated from the root Zadoff-Chu sequences by applying cyclic shifts.

10. The method of claim 9, wherein the DMRS part is generated by aggregating at least two elementary DMRS sequences.

11. The method of claim 10, wherein said aggregation consists in weighting each elementary DMRS sequence by applying a respective coefficient, which provides weighted elementary DMRS sequences, and adding the weighted elementary DMRS sequences, the sum of the squared coefficients applied to the elementary DMRS sequences being equal to 1.

12. The method of any preceding claim, wherein the method comprises using specific DMRS sequences to indicate that the enhanced PUSCH transmission comprises user-plane data for a Small Data Transmission.

13. The method of any preceding claim, wherein the method comprises assigning a number of specific PUSCH++ occasions to the UE to transmit user-plane data.

14. A User Equipment (1) configured to perform a RACH procedure to access a network (3) in a communication system (100), the network comprising at least one base station (2), the RACH procedure comprising sending a RACH message from the User Equipment (1) to the base station (2) on one or more uplink channels, wherein said message comprises an enhanced PUSCH transmission (PUSCH++) comprising a DMRS part and a PUSCH data part, the DMRS part being sent as a preamble, wherein the User equipment (1) is configured to transmit the DMRS part and the PUSCH data part together in a single transmission, wherein the enhanced PUSCH has a long length format that is the same format as a long length PRACH format or a format similar to the long length PRACH format.

15. A communication system comprising a user equipment according to claim 14, and at least one base station, wherein the base station is adapted to configure the transmission parameters of the enhanced PUSCH transmission.

**FIGURE 1**

<u>1</u>

11

DMRS and PUSCH data generator

→

12

Transmission unit

**FIGURE 2**

| PUSCH++ format | Subcarrier spacing | PUSCH++ Length | Bandwidth | CP duration | Sequence duration | Guard period duration | Total duration |
|---|---|---|---|---|---|---|---|
| 0 | 1.25 kHz | 839 | 1048.75 kHz | 103.13 $\mu$s | 800 $\mu$s | 96.88 $\mu$s | 1 ms |

**FIGURE 3**

**FIGURE 4**

**FIGURE 5**

| PUSCH++ format | Subcarrier spacing | PUSCH++ Length | Bandwidth | CP duration | Sequence duration | Guard period duration | Number of repetitions | Total duration |
|---|---|---|---|---|---|---|---|---|
| 1 | 1.25 kHz | 839 | 1048.75 kHz | 684.38 $\mu$s | 800 $\mu$s | 715.63 $\mu$s | 2 | 3 ms |
| 2 | 1.25 kHz | 839 | 1048.75 kHz | 152.6 $\mu$s | 800 $\mu$s | 647.40 $\mu$s | 4 | 4 ms |
| 3 | 5 kHz | 839 | 4195 kHz | 103.13 $\mu$s | 800 $\mu$s | 96.88 $\mu$s | 4 | 1 ms |

**FIGURE 6**

**FIGURE 7**

**FIGURE 8**

DMRS UE1
DMRS UE2
DMRS UE3
DMRS UE4

| 1 | — Data UE1 |
| + | |
| 2 | — Data UE2 |
| + | |
| 3 | — Data UE3 |
| + | |
| 4 | — Data UE4 |

839 REs

**FIGURE 9**

**FIGURE 10**

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/133357 A1 (RASTEGARDOOST NAZANIN [US]; DINAN ESMAEL HEJAZI [US] ET AL.) 23 June 2022 (2022-06-23) | 1,3-5, 10,11, 13-15 | INV. H04W74/08 |
| Y | * paragraph [0025] *<br>* paragraph [0142] *<br>* paragraph [0157] *<br>* paragraph [0174] *<br>* paragraph [0213] *<br>* paragraph [0239] *<br>-----| 2,6-9,12 | |
| Y | US 10 757 664 B2 (APPLE INC [US]) 25 August 2020 (2020-08-25) | 2 | |
| A | * column 20, line 52 - line 57 *<br>-----| 1,3-15 | |
| Y | "3rd Generation Partnership Project; Technical Specification Group Radio Access Network; NR; Physical layer procedures for control (Release 17)", 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. V17.3.0 21 September 2022 (2022-09-21), pages 1-260, XP052210880, Retrieved from the Internet: URL:https://ftp.3gpp.org/Specs/archive/38_series/38.213/38213-h30.zip 38213-h30.docx [retrieved on 2022-09-21] | 12 | TECHNICAL FIELDS SEARCHED (IPC)<br><br>H04W |
| A | * page 249, paragraph 19.2 *<br>-----| 1-11, 13-15 | |

-/--

The present search report has been drawn up for all claims

| Place of search | Date of completion of the search | Examiner |
|---|---|---|
| The Hague | 30 March 2023 | Scozzaro, Andrea |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ...............................................................................
& : member of the same patent family, corresponding
    document

**page 1 of 2**

Europäisches
Patentamt

European
Patent Office

Office européen
des brevets

**EUROPEAN SEARCH REPORT**

Application Number

EP 22 30 6750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "3rd Generation Partnership Project; Technical Specification Group Radio Access Network; NR; Physical channels and modulation (Release 17)", 3GPP STANDARD; TECHNICAL SPECIFICATION; 3GPP TS 38.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. V17.3.0 21 September 2022 (2022-09-21), pages 1-136, XP052210877, Retrieved from the Internet: URL:https://ftp.3gpp.org/Specs/archive/38_series/38.211/38211-h30.zip 38211-h30.docx [retrieved on 2022-09-21] | 6-9 | |
| A | * page 46, lines 9-11, paragraph 6.3.3.1 * * page 48; tables 6.3.3.1.-1, 6.3.3.1.-2 * | 1-5, 10-15 | |
| A | Dahlman Erik ET AL: "5G NR The Next Generation Wireless Access Technology, 2nd Edition, Chapters 1-17" In: "5G NR", 18 September 2020 (2020-09-18), Elsevier, XP055908004, ISBN: 978-0-12-822320-8 pages 1-611, * page 354, paragraph 17.1.3 – page 355, paragraph 17.1.3.2 * | 1-15 | TECHNICAL FIELDS SEARCHED (IPC) |

The present search report has been drawn up for all claims

| Place of search | Date of completion of the search | Examiner |
|---|---|---|
| The Hague | 30 March 2023 | Scozzaro, Andrea |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 30 6750

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2023

| Patent document cited in search report | | Publication date | Patent family member(s) | | | Publication date |
|---|---|---|---|---|---|---|
| WO 2022133357 | A1 | 23-06-2022 | NONE | | | |
| US 10757664 | B2 | 25-08-2020 | CN | 107534948 | A | 02-01-2018 |
| | | | EP | 3295727 | A1 | 21-03-2018 |
| | | | EP | 3664528 | A1 | 10-06-2020 |
| | | | HK | 1249327 | A1 | 26-10-2018 |
| | | | JP | 6774961 | B2 | 28-10-2020 |
| | | | JP | 2018519692 | A | 19-07-2018 |
| | | | US | 2018302868 | A1 | 18-10-2018 |
| | | | WO | 2016182533 | A1 | 17-11-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZTE.** *RP-200085 Revised WID on 2-step RACH for NR,* 2020